# EUROPEAN PATENT SPECIFICATION

(11) **EP 3 387 191 B1**
(45) Date of publication and mention of the grant of the patent: **06.11.2019**
(21) Application number: 15808226.3
(22) Date of filing: 11.12.2015
(51) Int. Cl.: E02C 1/06, F03B 13/06

(54) **SHIP LOCK SYSTEM FOR A CANAL**
SCHIFFSPERRSYSTEM FÜR EINEN KANAL
SYSTÈME D'ÉCLUSE POUR BATEAUX POUR UN CANAL

(43) Date of publication of application: 17.10.2018
(73) Proprietor: Grundfos Holding A/S, 8850 Bjerringbro (DK)
(72) Inventor: BOHN, Heinz, 21379 Rullstorf (DE)
(74) Representative: Plougmann Vingtoft a/s
(86) International application number: PCT/EP2015/079440
(87) International publication number: WO 2017/097378

(56) References cited:
- DE-B- 1 130 766
- DE-C- 838 275
- US-A- 4 310 769
- US-B2- 6 969 925

## Description

### Field of the Invention

The present invention relates to a ship lock system for use in a canal and a method of regulating the filling and emptying of water into a ship lock of a ship lock system.

### Background of the Invention

A ship lock operates to connect an upper body of water (or equivalently an upstream level of water) with a lower body of water (or equivalently a downstream level of water) by alternately lowering and raising of water in the ship lock.

In rivers, the ship locks are operated using the gravity force to transfer a volume of water from one side to the other side of a lock gate. Once the water levels have equilibrated, the lock gate can be opened such that a ship may navigate through the gate. Accordingly, river ship locks do not require pumps.

However, in canals the locking of ships lead to a loss of water from the upstream level. As compensation, water has to be pumped back towards the upstream level. To reduce the amount of pumping, ship locks systems in a canal typically comprise water basins to store water, e.g. with three basins in different levels. In a lock with three basins, there is a need for electrical energy for compensating the loss of water corresponding to 50% of the geodetic energy assuming a 60% saving of water and an 80% efficiency for the pumping operation.

US patent no. 6,969,925 discloses a ship lock that utilises pump-turbines to regulate the discharge flow through the ship lock to an approximate constant value during the majority of a water transfer cycle. This results in diminishing of total energy consumption and head losses and enables the recuperation of unused hydraulic energy for generation as electricity.

US patent no. 4,310,769 discloses a ship lock interconnecting two bodies of water at different water levels. The system includes one or more underground hydroelectric pumped-storage units connected by one or more penstocks which serves as the upper reservoir to the pumped-storage units so that water can be drained from the ship lock through the penstocks to drive one or more reversible pump-turbines of the pumped-storage units which generates electrical energy, particularly during high demand hours for electrical energy.

However, the prior art ship lock systems do not deal with the problem of reducing energy consumption for ship lock systems experiencing water loss. Accordingly, there is a need for ship lock systems and methods of operating such systems, which deals with this problem.

### Summary of the Invention

It is an object of the invention to obtain a ship lock system and a method of operating such a ship lock system, which overcome or ameliorate at least one of the disadvantages of the prior art or which provides a useful alternative.

This is according to a first aspect of the invention achieved by a ship lock system comprising:
- at least one ship lock for connecting a first body of water, e.g. an upper body of water, and a second body of water, e.g. a lower body of water,
- at least a first fluid communication passageway configured to coupling the ship lock with the first body of water,
- at least a second fluid communication passageway configured to coupling the ship lock with the second body of water,
- at least one first turbine pump arranged in fluid communication with the at least first fluid communication passageway,
- at least one second turbine pump arranged in fluid communication with the at least second fluid communication passageway, and
- a control system for controlling the at least one first turbine pump and the at least one second turbine pump, wherein
- the least first turbine pump is configured to function in a generator mode as an electrical generator and generating electrical power when water flows through the at least first fluid communication passageway from the first body of water to the ship lock, and is further configured to function in a pump mode as a pump for pumping water through the at least first fluid communication passageway from the ship lock to the first body of water, and
- the at least one second turbine pump is configured to function in a generator mode as an electrical generator and generating electrical power when water flows through the at least second fluid communication passageway from the ship lock to the second body of water, and is further configured to function in a pump mode as a pump for pumping water through the at least second fluid communication passageway from the second body of water to the ship lock, and wherein
- the at least one first turbine pump and the at least one second turbine pump each are connected to a mains supply via a turbine pump drive capable of providing a bi-directional electrical energy flow.

This provides a highly effective ship lock system, which may be used as a system for generating electrical power when the water flows in direction from the first body of water towards the second body of water through the ship lock. Simultaneously, the system may also be used to pump water in a direction from the second body of water towards the first body of water through or into the ship lock and utilising the same turbine pumps as used for electrical power generation. This is particular suitable for ship locks in a canal, where it may be necessary to pump water back into an upper water reservoir in order to ensure a sufficient water level. Overall, the system provides a highly efficient system, where most of the gained electrical power may be reused for the system working in pump mode. The turbine pump may in generator mode supply power to a mains via a frequency converter, whereas the mains may supply energy to the turbine pump when operated in pump mode.

Advantageously, the system does not need a separate water storage or basin for compensating for water loss in the canal system. Accordingly, the ship lock system according to the invention is seen to save money and space compared to conventional systems in canals.

Further, the system allows for storage of energy at times outside locking of ships. Thereby, water may be pumped from the second body of water to the first body of water. Replenishment of water into the upstream canal, here called the first body of water, can e.g. be made by letting all or some the first turbine pumps and the second turbine pumps run as pumps at the same time and in the same direction from the downstream water to upstream canal. This may for instance be used for storage of excess energy, e.g. from wind turbines. This may increase the water level of the first body of water or lower the water level of the second body of water a few millimetres.

When needed, the stored energy can be converted into electrical energy by using the turbine mode.

It is clear that the ship lock is arranged between the first body of water and the second body of water, preferably an upper or upstream level of water and a lower or downstream level of water. The controller for controlling the system and method according to the invention is preferably a PLC or another type of industry computer.

The turbine pump drive capable of providing a bi-directional energy flow is an adjustable speed drive. This can be a DC motor drive, a matrix converter drive or a frequency converter drive. The drives must be able to run in a two-quadrant mode, i.e. either control the speed of the turbine pump by injecting electrical current into the motor or to send energy from the motor to the mains. Preferably, a frequency converter is used as turbine pump drive. The frequency converter is preferably a frequency converter that can provide a variable frequency. The frequency converter is controlled by the control system and may be utilised to control the speed of the turbine pump to control the speed of pumping in pump mode or control the power generation when the turbine pump is operated in generator mode. The frequency converter preferably comprises an AC/DC converter, an intermediate circuit and a DC/AC converter. Frequency converters are well-known in the prior art and are also named variable speed drives. The frequency converter used in the current invention is a converter, which also can convert and transmit electrical energy into the mains. It does this by converting the electrical energy from the turbine pumps working in generator mode into electrical energy, which has a frequency and an amplitude adapted to fit the mains frequency and amplitude.

Preferably, the at least one first turbine pump and the at least one second turbine pump each comprises a pump and an electrical machine, which may be operated either as a generator or as a motor.

In context of the present invention, a turbine pump is to be understood as a single device, which may be operated as an electrical power generator, when water flows in one direction through the device, and which may be utilised as a pump in order to pump water in fx an opposite direction through the device.

In a highly advantageous embodiment, the system comprises a plurality of first turbine pumps arranged in parallel in the at least first fluid communication passageway, and comprises a plurality of second turbine pumps arranged in parallel in the at least second fluid communication passageway. This provides additional flexibility to the system and allows raising or lowering of the water level in the ship lock according to many different operation schemes. The individual members of the group of first turbine pumps and second turbine pumps can be operated at different speeds, or all members in the group of first turbine pumps can be run at one speed and one head, whereas the members of the group of second turbine pumps are run at another speed and another head.

The system may advantageously further comprise a number of sensors that are configured to measure a first head between the first body of water and the ship lock, and a second head between the ship lock and the second body of water. The sensors may be arranged to measure the head directly or indirectly. In one embodiment, the sensors are water level sensors for measuring the water level in the first body of water, the ship lock, and the second body of water respectively. It is also possible to calculate the head by use of sensors measuring a pressure difference over the turbine pumps. The first turbine pumps can be controlled as a function of the head or distance between the level of the first body of water and the level of water in the ship lock, and the second turbine pumps can be controlled as a function of the head or distance between the level of water in the ship lock and the level of water in the second body of water. Preferably, however, a control parameter including both of these heads or levels are calculated and used by the controller for controlling both the first turbine pumps and the second turbine pumps. The control parameter is calculated as the ratio between the level difference between the ship lock and the second body of water divided by the sum of the level difference between the first body of water and the ship lock and the level difference between the ship lock and the second body of water.

In another advantageous embodiment, the control system is configured to operate the at least one first turbine pump and the at least one second turbine pump in the generator mode at or near a Best Efficiency Point (BEP) in order to obtain a maximum hydraulic efficiency, and/or the control system is configured to operate the at least one first turbine pump and the at least one second turbine pump in the pump mode at or near a Best Efficiency Point (BEP) in order to obtain a maximum hydraulic efficiency.

The Best Efficiency Point (BEP) is the point, where the turbine pump is operated at its peak efficiency. The BEP depends on the head or correspondingly the pressure drop over the turbine pump. It is known in the art how to operate a turbine pump at the BEP. This can for instance be done by adjusting the rotational speed of the impeller in the pump or turbine by means of the turbine pump drive, and hence adjust the flow rate to be at or near the best efficiency point of the turbine pump. In terms of the present invention "at or near" corresponds to the speed of the turbine pump being operated at maximum 20% from the speed at BEP, advantageously maximum 15% from said speed, and more advantageously maximum 10% from said speed.

In yet another advantageous embodiment, the speed of the turbine pump is operated at or above a minimum speed. The minimum speed may for instance be 15%, or 20%, or 25%, or 30% of a nominal (or maximum) speed of the turbine pump. Thereby, it is ensured that the filling or emptying of the ship lock is always carried out at a minimum speed, in particular for cases where the BEP is calculated to be below the minimum speed, which could lead to very slow filling or emptying sequences.

This may in generator mode be obtained by controlling the flow rate through the respective turbine pump. In the pump mode, the motor of the turbine pump may be driven via a turbine pump drive, preferably a frequency converter, in variable speed mode.

In yet another advantageous embodiment, the system is configured to operate in a ship lock emptying mode and a ship lock filling mode, wherein
in the ship lock emptying mode, the control system is configured to operate the at least one first turbine pump in the pump mode and simultaneously operate the at least one second turbine pump in the generator mode, and
in the ship lock filling mode, the control system is configured to operate the at least one first turbine pump in the generator mode and simultaneously operate the at least one second turbine pump in the pump mode.

This allows the system to be operated in modes, where the ship lock may very quickly be emptied or filled compared to prior art ship locks. At the same time, this configuration ensures that enough water is pumped back into the first reservoir. When operating the first turbine pump(s) and the second turbine pump(s), the water is moved on average by approximately 60% of the total head. If the total efficiency of the system is 75% and the turbine pumps are operated with variable speed to work at BEP, the remaining energy consumption is approximately 17% of the geodetic energy. This in turn corresponds to only approximately 34% of that of a lock having three basins.

Accordingly, it is seen that the system may be operated to save a significant energy compared to conventional ship lock systems.

Head (also called hydraulic head) is a term that is used in fluid dynamics and may be used to define a liquid pressure between two bodies. The available hydraulic head between the two bodies (before head losses from turbine or pumps, wall friction and turbulence) is typically defined by the water level difference between the two bodies.

In a further embodiment, the system is configured to operate in a ship lock emptying mode and a ship lock filling mode, wherein
in the ship lock emptying mode, the control system is configured to operate the at least one first turbine pump in the pump mode and operate the at least one second turbine pump in the generator mode, and
in the ship lock filling mode, the control system is configured to operate the at least one first turbine pump in the generator mode and operate the at least one second turbine pump in the pump mode, and wherein
the control system is configured to only operate that of the at least one first turbine pump and the second turbine pump, which has a smaller head during said ship lock emptying mode or said ship lock filling mode.

This allows the system to be operated in a energy saving mode, where the filling or emptying sequence may be carried out at a lower speed in order to save energy. In the energy saving mode, the water may be moved on average by approximately 25% of the total head only. By using operation with variable speed at BEP, this can reduce the energy consumption down to approximately 7% of the geodetic energy, which in turn is only approximately 14% of that of a lock having three basins. In practice, the head may be calculated based on the water levels in the first body of water, the ship lock, and the second body of water. The controller compares the difference in levels between the first body of water and the ship lock with the level difference between the level in the ship lock and the second body of water, and activates that turbine pump which is related to the lowest value of the two level differences.

The system may further be configured to switch between the two different embodiments described above.

In one embodiment, the control system is configured to operate the system in various emptying and water filling modes, wherein the at least one first turbine pump and the at least one second turbine pump each may be switched on and off and/or be switched between the generator mode and the pump mode in according to a pre-set or predefined program. The program may be based on a pre-set temporal pattern, or it may be based on a program according to a measured or calculated head between the first body of water and the ship lock and/or the ship lock and the second body of water, respectively. In the switched-on mode of a turbine pump, the turbine pump can preferably be adjusted in speed by means of the turbine pump drive. By pre-set temporal pattern is to be understood a program or a state machine executed by the controller. The system may for instance in a ship lock emptying mode be configured to switch between a maximum emptying rate mode and an energy saving mode and/or the system in a ship lock filling mode is configured to switch between a maximum filling rate mode and an energy saving mode. In the energy saving mode, the turbine pumps are operated to respectively fill or empty the ship lock at a lower rate than at respectively the maximum filling rate mode and the maximum emptying rate mode. The energy saving mode may be operated as described in the aforementioned embodiment.

Each of the at least one first turbine pumps and the at least one second turbine pumps may advantageously be serially connected with a valve, which is configured to stop the flow, when the respective turbine pump is not in use, or to reduce the flow. This provides a simple solution for shutting the flow through the turbine pump on and off. The valve may for instance be a motorised valve and may be controlled by the control system.

In one embodiment, the at least one first turbine pump and the at least one second turbine pump are arranged in series in a shared fluid communication passageway. In another embodiment, the at least first fluid communication passageway and the at least second fluid communication passageway are separated passageways.

The at least one first turbine pump and/or the second turbine pump may be horizontal split case pumps or vertical turbine pumps. They belong to the type of Energy Recovery Turbines. Such turbine pumps are commercially available from the Peerless brand of Grundfos products.

The ship lock preferably comprises a first gate between the first body of water and the ship lock for permitting passage of ships between the first body of water and the ship lock, and a second gate between the second body of water and the ship lock for permitting passage of ships between the second body of water and the ship lock.

According to a second aspect, the invention also provides a method of regulating the filling and emptying of water into a ship lock of a ship lock system, which is arranged to connect a first body of water, e.g. an upper body of water, and a second body of water, e.g. a lower body of water, and where at least a first fluid communication passageway is configured to coupling the ship lock with the first body of water with at least one first turbine pump being arranged in the at least a first fluid communication passageway, and at least a second fluid communication passageway configured to coupling the ship lock with the second body of water with at least one second turbine pump being arranged in at least a second fluid communication passageway, and where the at least one first turbine pump and the at least one second turbine pump are controlled by a control system, wherein the system is configured to operate in a ship lock emptying mode and a ship lock filling mode, wherein
in the ship lock emptying mode, the controller system operates the at least one first turbine pump and the at least one second turbine pump according to a pre-set program, in which the at least one first turbine pump is operated in a pump mode pumping water from the from the ship lock to the first body of water and where the at least one second turbine pump is operated in a generator mode generating electrical power as water flows from the ship lock to the second body of water, and
in the ship lock filling mode, the controller system operates the at least one first turbine pump and the at least one second turbine pump according to a pre-set program, in which the at least one second turbine pump is operated in a pump mode pumping water from the from the second body of water to the ship lock and where the at least one first turbine pump is operated in a generator mode generating electrical power as water flows from the first body of water to the ship lock.

This provides a highly effective method of filling or emptying a ship lock, in particular in a canal, where the turbine pumps may be utilised for generating electrical power when the water flows in direction from the first body of water towards the second body of water through the ship lock. Simultaneously, the method also allows to pump water in a direction from the second body of water towards the first body of water through or into the ship lock and utilising the same turbine pumps as used for electrical power generation. Preferably the at least one first turbine pump and the at least one second turbine pump are each connected to a mains supply via a turbine pump drive capable of providing a bi-directional electrical energy flow.

According to an advantageous embodiment, the method at least in first time periods is carried out by:
in the ship lock emptying mode, the at least one first turbine pump is operated in the pump mode simultaneously with the at least one second turbine pump being operated in the generator mode, and
in the ship lock filling mode, the at least one first turbine pump is operated in the generator mode simultaneously with the at least one second turbine pump being operated in the pump mode.

This allows the ship lock to be emptied or filled rather fast and allows large energy savings compared to conventional ship locks, if the turbine pumps are operated at variable speed at BEP. The turbine pumps from the group of first turbine pumps and from the group of second turbine pumps will be operated at different best efficiency points and hence have different speeds.

According to an advantageous embodiment, the method at least in second time periods is carried out by:
the control system controls the at least one first turbine pump and the at least one second turbine pump so as to operate only that of the at least one first turbine pump and the at least one second turbine pump, which has a smaller head (*h₁* or *h₂*) during said ship lock emptying mode or said ship lock filling mode.

This allows the ship lock to be emptied or filled at a slower rate with additional energy saving, if the turbine pumps are operated at variable speed at BEP.

Advantageously, the ship lock system comprises a plurality of first turbine pumps arranged in parallel in the at least first fluid communication passageway, and comprises a plurality of second turbine pumps arranged in parallel in the at least second fluid communication passageway. This allows a further flexibility to the method. For instance, the plurality of first turbine pumps and the plurality of second turbine pumps may be operated according to the pre-set program. Each of the plurality of first turbine pumps and the plurality of second turbine pumps may be operated to switch on and off and/or be switched between the generator mode and the pump mode accordance to the pre-set program. The programs may be based on a pre-set program or temporal pattern, or it may be based on a program according to measured or calculated head between the first body of water and the ship lock and the ship lock and the second body of water, respectively.

In an attempt to reduce electrical mains retro-action the time period from generating power into the mains or consuming power from the mains, or vice versa, can be extended. This is done by a method where the turbine pumps are stepwise cut-in or cut-out, i.e. activated or deactivated. A transgression period from generating electrical power into the mains to consuming power from the mains is prolonged in time by letting the controller sequentially activating or deactivating individual turbine pumps inside the groups of first and/or second turbine pumps.

A control method is possible wherein a fixed number of turbine pumps within either the group of first turbine pumps or second turbine pumps are kept activated for a period of time, e.g. the total number of parallel first turbine pumps are running. In the other group, i.e. the second turbine pumps, only a few or none are running but inside said period of time the number of activated turbine pumps within the group of second turbine pumps is incremented stepwise by the controller, e.g. one-by-one. This control strategy gives energy savings compared to an "all turbine pumps on" strategy.

### Brief Description of the Figures

The invention is explained in detail below with reference to embodiments shown in the drawings, in which
Fig. 1 shows a schematic view of a first embodiment of a ship lock system according to the invention,
Fig. 2 illustrates a method of operating the first embodiment in a ship lock filling mode,
Fig. 3 illustrates a method of operating the first embodiment in a ship lock emptying mode,
Fig. 4 shows a schematic view of a second embodiment of a ship lock system according to the invention,
Fig. 5a and 5b show the flow rate and the corresponding net power consumption for a first example of fast emptying mode operation the ship lock system,
Fig. 6a and 6b show the flow rate and the corresponding net power consumption for a second example of operating the ship lock system in which an energy saving emptying mode is applied,
Fig. 7a and 7b show the flow rate and the corresponding net power consumption for a third example of operating the ship lock system in an emptying mode, and
Figs. 8-11 show flow charts for operating a ship lock system according to the invention.

### Detailed Description of the Invention

The present invention relates to a ship lock system and a method of regulating the filling and emptying of water into a ship lock of a ship lock system, and which are particularly suited for canals.

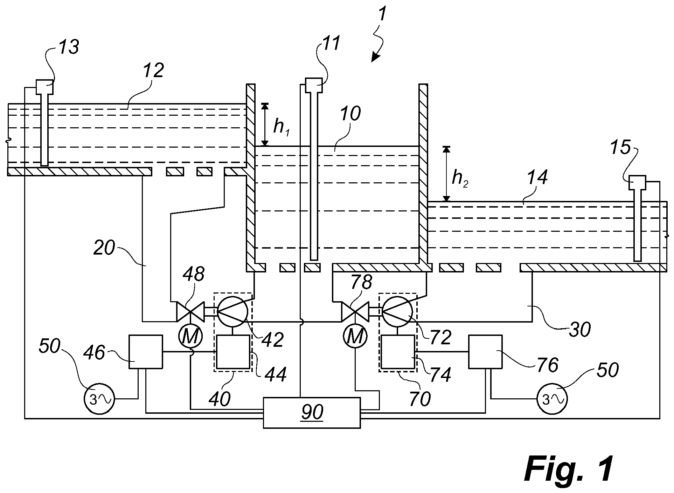

Fig. 1 shows a schematic view of a ship lock system 1 according to the invention. The ship lock system 1 comprises a ship lock 10, which is located between a first body of water 12, preferably an upper or upstream body of water, and a second body of water 14, preferably a lower or downstream body of water. The ship lock system 1 comprises a first fluid communication passageway 20, which is arranged and configured to coupling the ship lock 10 with the first body of water 12, and a second communication passageway 30, which is arranged and configured to coupling the ship lock 10 with the second body of water 14. The ship lock system 1 further comprises a first gate and a second gate, not shown. The first gate is arranged between the first body of water 12 and the ship lock 10 for permitting passage of ships between the first body of water 12 and the ship lock 10. The second gate is arranged between the second body of water 14 and the ship lock 10 for permitting passage of ships between the second body of water 14 and the ship lock 10.

A first turbine pump 40 is arranged within and in fluid communication with the first fluid communication passageway 20, and a second turbine pump 70 is arranged within and in fluid communication with the second fluid communication passageway 30. The first turbine pump 40 and the second turbine pump are both of the type, which may be operated in a generator mode as an electrical generator when water flows through the turbine pump, and which may further be operated in a pump mode as a pump for pumping water through the turbine pump in the opposite direction.

As shown in Fig. 1, the first turbine pump 40 may be divided into a pump 42 and an electrical machine 44, which may be operated either as a generator in the generator mode or as a motor in the pump mode. Equivalently, the second turbine pump 70 may be divided into a pump 72 and an electrical machine 74, which may be operated as a generator in the generator mode or as a motor in the pump mode. The turbine pumps 40, 70 may for instance be horizontal split case pumps or vertical turbine pumps.

In the ship lock system 1 according to the invention, the first turbine pump 40 is arranged and configured to function in a generator mode as an electrical generator and generating electrical power when water flows through the at least first fluid communication passageway 20 from the first body of water 12 to the ship lock 10, and is further configured to function in a pump mode as a pump for pumping water through the at least first fluid communication passageway 20 from the ship lock 10 to the first body of water 12. The second turbine pump 70 is arranged and configured to function in a generator mode as an electrical generator and generating electrical power when water flows through the at least second fluid communication passageway 30 from the ship lock 10 to the second body of water 14, and is further configured to function in a pump mode as a pump for pumping water through the at least second fluid communication passageway 30 from the second body of water 14 to the ship lock 10.

The first turbine pump 40 may be connected to a mains supply 50 via a first speed controller 46, preferably in form of a variable frequency converter. Similarly, the second turbine pump 70 may be connected to a mains supply 50 via a second speed controller 76, also preferably in the form of a variable frequency converter. The first speed controller 46 and the second speed controller are regulated via a controller 90, which together form a control system for the ship lock system 1. The control system allows regulating the speed of pumping and level of energy generation for the turbine pumps operating in pump mode and generator mode, respectively.

The ship lock system 1 may further comprise a first valve 48 serially connected to the first turbine pump 40 such that a flow through the first fluid communication passageway 20 and the first turbine pump 40 may be turned on and off. Equivalently, a second valve 78 may be serially connected to the second turbine pump 70 such that a flow through the first fluid communication passageway 30 and the second turbine pump 70 may be turned on and off. The first valve 48 and the second valve 78 may for instance be motorised valves and may be controlled via the controller 90. Thereby, the control system may be configured to regulate the speed of flow through the turbine pumps 40, 70 and further shut the flow on and off altogether. Thus, the control system may carry out raising or lowering the water levels in accordance with a pre-set temporal pattern or program. The programs may for instance be a maximum filling/emptying rate mode and various energy saving modes.

The ship lock system 1 may further comprise a number of sensors configured for measuring or calculating a first head between the first body of water 12 and the ship lock and for measuring or calculating a second head between the ship lock 10 and the second body of head 14. The first head may correspond to a water level difference *h₁* between the first body of water 12 and the ship lock 10. Similarly, the second head may correspond to a water level difference *h₂* between the ship lock 10 and the second body of water 14. In the depicted embodiment, the sensor systems comprise a first water level sensor 11 for measuring the water level in the ship lock 10, a second water level sensor 13 for measuring the water level in the first body of water, and a third water level sensor 15 for measuring the water level in the second body of water 14. It is recognised that other types of sensors may also be used for measuring or calculating the first head and the second head. It is for instance possible to provide sensors that measure a pressure difference over a turbine pump and the associated valve. The sensors 11, 13, 15 are advantageously coupled to the controller 90.

Overall, a highly effective ship lock system 1 is provided, which may be used as a system for generating electrical power when the water flows in direction from the first body of water 12 towards the second body of water 14 through the ship lock 10. Simultaneously, the system 1 may also be used to pump water in a direction from the second body of water 14 towards the first body of water 12 through or into the ship lock 10 and utilising the same turbine pumps 40, 70 as used for electrical power generation. This is particular suitable for ship locks in a canal, where it may be necessary to pump water back into an upper water reservoir in order to ensure a sufficient water level. Overall, the system 1 provides a highly efficient system, where most of the energy gained by electrical power generation may be reused for the system working in pump mode. The turbine pumps 40, 70 may in generator mode supply power to the mains via the frequency converters 46, 76, whereas the mains may supply energy to the turbine pumps 40, 70 when operated in pump mode.

Further, the system allows for storage of energy at times outside locking of ships. Thereby, water may be pumped from the second body of water 14 to the first body of water 12. This may for instance be used for storage of excess energy, e.g. from wind turbines. This may increase the water level of the first body of water 12 or lower the water level of the second body of water 14 a few millimetres. When needed, the stored energy can be converted into electrical energy by using the turbine mode.

It is noted that the embodiment shown in Fig. 1 shows that the first fluid communication passageway 20 and the second fluid communication passageway 30 are mutually connected. However, it is recognised that the two communication passageways may also be configured as two separate passageways without a direct connection. Further, it should be understood that the embodiment shows only one ship lock. However, the invention also contemplates having two or more ship locks.

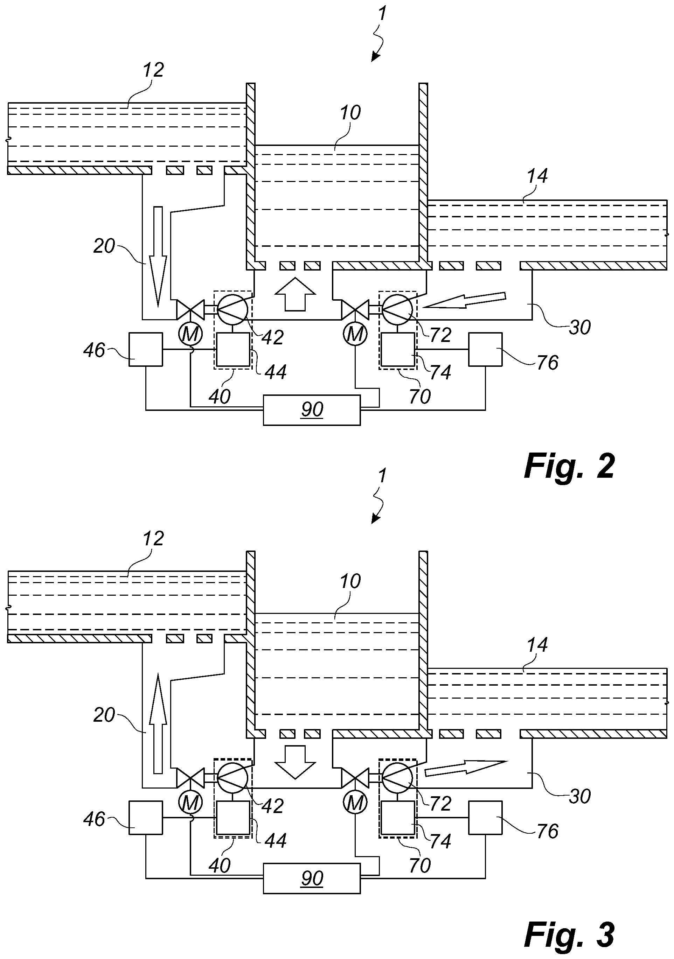

Fig. 2 illustrates a method of operating the first embodiment in a ship lock filling mode. In the ship lock filling mode, the first turbine pump 40 may be operated in generator mode and generate energy which may be supplied to the mains as water flows through the first fluid communication passageway 20 from the first body of water 12 and into the ship lock 10 as indicated by the arrow. The second turbine pump 70 may simultaneously be operated in pump mode and pump water from the second body of water 14 through the second fluid communication passageway 30 and into the ship lock 10 as indicated by the arrow. The second turbine pump 70 is powered from the mains supply. As previously mentioned, the ship lock filling mode may be operated according to various programs, where the speed of the turbine pumps 40, 70 may be varied or turned on and off according to a pre-set temporal sequence or pattern.

Fig. 3 illustrates a method of operating the first embodiment in a ship lock emptying mode. In the ship lock emptying mode, the first turbine pump 40 may be operated in pump mode and pumps water from the ship lock 10 through the first fluid communication passageway 20 and to the first body of water 12 as indicated by the arrow. The first turbine pump 40 is powered from the mains supply. The second turbine pump 70 may simultaneously be operated in generator mode and generate energy which may be supplied to the mains as water flows through the second fluid communication passageway 30 from the ship lock 10 and into the second body of water 14 as indicated by the arrow. As previously mentioned, the ship lock emptying mode may be operated according to various programs, where the speed of the turbine pumps 40, 70 may be varied or turned on and off according to a pre-set temporal sequence or pattern.

The control system may operate the turbine pumps 40, 70 to operate at a Best Efficiency point (BEP) in order to obtain a maximum hydraulic efficiency for the respective turbine pump. For fluid pumps the efficiency is defined as the ratio between the hydraulic power, which the pump delivers to the fluid, and the power input to the shaft of the pump. The hydraulic power is defined as the product of the density of the liquid, the gravity acceleration, the flow rate Q and the head H. In a diagram (not shown) with the hydraulic efficiency on the vertical axis and the flow rate Q on the horizontal axis, i.e. hydraulic efficiency as a function of the flow rate Q, the curve will in many cases be a parabola starting in (0, 0) and increasing to a top point called BEP from which point the efficiency decreases with increasing flow rate. Such curve is typical for a centrifugal pump. The flow rate of the turbine pumps must according to the invention be varied to be at or in the range of efficiency top point. If a turbine pump runs as pump, the BEP may be different from the BEP, when running as a generator. The BEP may be calculated from the calculated or measured head from the measurements from the sensors 11, 13, 15. The ship lock 1 may be operated at a maximum filling or emptying rate mode by operating the first turbine pump 40 and the second turbine pump 70 simultaneously as shown in Figs. 2 and 3. However, the control system may also operate the ship lock 1 in energy saving mode, where only that of the at least one first turbine pump 40 and the at least one second turbine pump 70, which has a smaller head is operated during said ship lock emptying mode or said ship lock filling mode. The operation will shift as the water level in the ship lock 10 is lowered or raised and the first head and the second head change, such that the first turbine pumps are operated as pumps, when the first head is smaller and the second turbine pumps are operated when the second head is smaller than the first head.

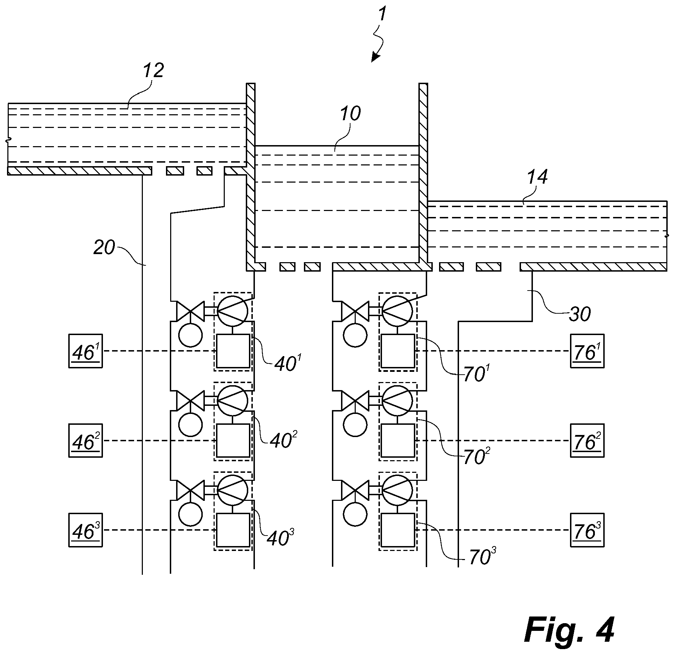

While the invention in the previous embodiments have been described in relation to a ship lock having one first turbine pump and one second turbine pump, it is recognised that the ship lock may advantageously be provided with a plurality of first turbine pumps and a plurality of second turbine pumps. Such an embodiment is shown in Fig. 4.

The ship lock system 1 shown in Fig. 4 corresponds to the ship lock system of Fig. 1 where like reference numerals refer to like parts. Only the differences between the two embodiments are described here. The embodiment differs in that a plurality of first turbine pumps 40¹-40^{N} (only 40¹-40³ being depicted) are arranged in parallel in the first fluid communication passageway 20, each being provided with a separate valve and connected to the mains via a separate variable frequency converter 46¹-46^{N}. The individual first turbine pumps 40¹-40^{N} are arranged in separate sub-channels in the first fluid communication passageway 20. In terms of the invention, the sub-channels may be perceived as a plurality of first fluid communication passageways. Similarly, the ship lock system 1 of Fig. 4 comprises a plurality of second turbine pumps 70¹-70^{N} (only 70¹-70³ being depicted) arranged in parallel in the second fluid communication passageway 30. Each of the second turbine pumps 70¹-70^{N} are provided with a separate valve and connected to the mains via a separate variable frequency converter 76¹-76^{N}.

The embodiment of Fig. 4 allows adding further flexibility to the method of regulating the water levels. For instance, the plurality of first turbine pumps and the plurality of second turbine pumps may be operated according to the pre-set temporal pattern. Each of the plurality of first turbine pumps and the plurality of second turbine pumps may be operated to switch on and off and/or be switched between the generator mode and the pump mode in accordance to the pre-set temporal pattern.

### Examples of operating a ship lock according to the invention

In the following a number of exemplary embodiments for operating a ship lock according to the invention are described, which embodiments are described in relation to a ship lock emptying method, where a given amount of water has to be filled from the ship lock.

### EXAMPLE I - FAST EMPTYING MODE

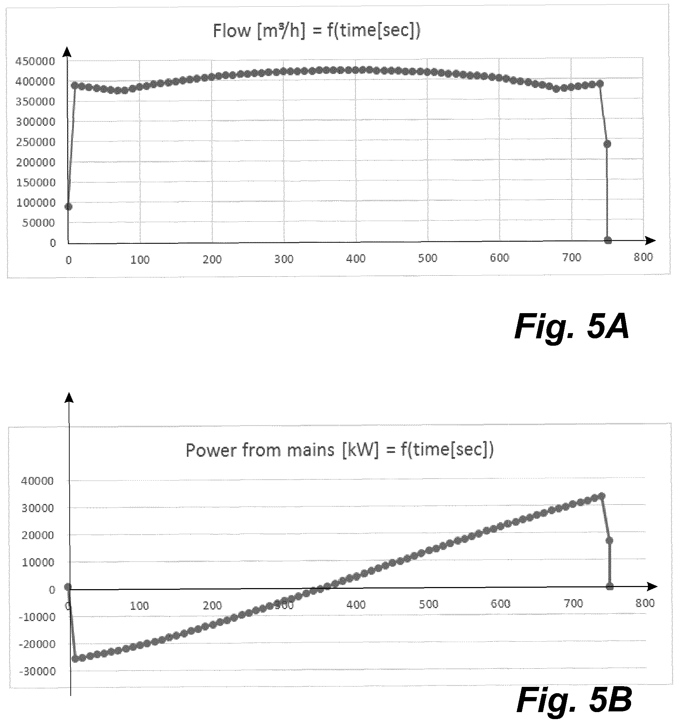

Fig. 5a and 5b show the flow rate and the corresponding net power consumption as a function of time for a first example of operating the ship lock system, where a ship lock emptying method is carried out in a fast operation. The ship lock system comprises ten parallel first turbine pumps operated in generator mode and ten parallel second turbine pumps operated simultaneously in pump mode.

The first turbine pumps and the second turbine pumps are operated such that the water is moved by approximately 60% of the total head, which provides a flow over time as shown in Fig. 5a. Fast mode means that the first turbine pumps and the second turbine pumps are running at the same time. Fast mode is a time mode. In the emptying process the first turbine pumps are operated as pumps, and the second turbine pumps as turbines. At the beginning of the emptying process the second turbine pumps acting as turbines will experience the full pressure or head (*h₁* + *h₂*) of the ship lock 10. Over time the level difference *h₂* will decrease and the experienced head of the second turbines will become smaller, while the first turbine pumps acting as pumps will experience an increase in the lifting pressure or head they have to generate against the first body of water 12. The first and second turbine pumps thus experience different heads and accordingly different speeds (due to the search for a Best Efficiency Point) and different flow rate.

In the first half of the emptying process the first turbine pumps (acting as pumps) work with smaller head and flow rate, while during this time the second turbine pumps (acting as turbines) work with a larger head and flow rate. When the ship lock is emptied to 50%, the smaller amount of water from the ship lock has been pumped and the larger amount has been passing the generators.

In the second half of the emptying process the first turbine pumps work with a large head and flow rate, while during this time the second turbine pumps work with smaller head and flow rate. When the ship lock 10 is fully emptied, the amount of water, which was pumped to the upstream body of water 12, and the amount of water, which was passing to the downstream body of water 14, is the same. The calculation of an average head may be done by the mathematical integration of the head values, weighted by the actual flow rate (transported at this head) at each time. This leads to an average head in this fast mode of approx. 60% of the maximum head (*h₁* + *h₂*). This average head gives an indication, which amount of geodetic energy is transferred to or from the water. Turning to Fig. 5B, the corresponding net power production starts with approximately 25,000 kW at the beginning of the emptying process and ends with approximately 32,000 kW power consumption at the end of the process. The net power consumption is gradually increasing in the time period.

If the total efficiency of the system is 75% and the turbine pumps are operated with variable speed at BEP, the remaining energy consumption is approximately 17% of the geodetic energy, which corresponds to only approximately 34% of the energy consumption from a conventional ship lock system.

This mode or program has the advantage of providing a fast lock operation. However, the program has rather high energy consumption compared to other possible programs for the invention, and further there is a large peak in power generation at the beginning of the process and a large peak in power consumption at the end of the process.

### EXAMPLE II - ENERGY SAVING MODE (EMPTYING)

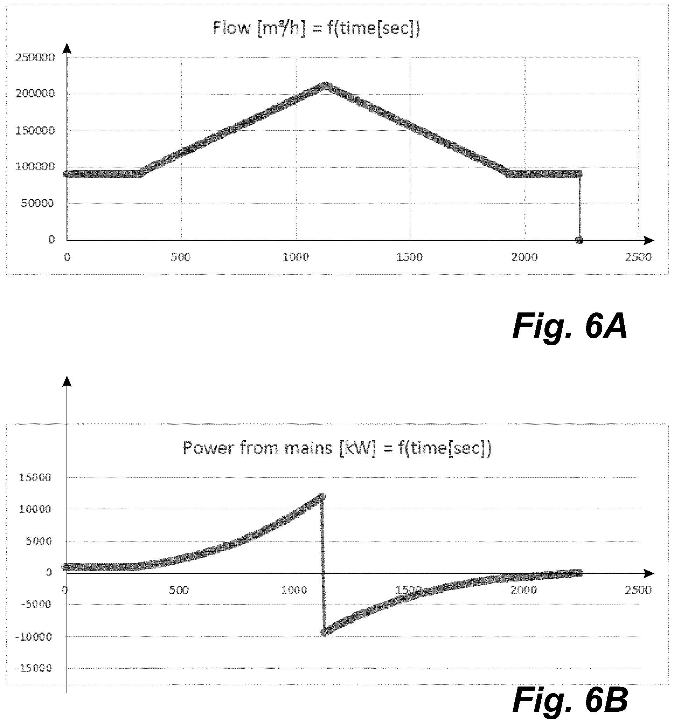

Fig. 6a and 6b show the flow rate and the corresponding net power consumption as a function of time for a second example of operating the ship lock system, where a ship lock emptying method is carried out in an energy saving mode. In energy saving mode the first and second turbine pumps are not operated at the same time, but operates out-of-phase, i.e. shifted in time. Similar to the first example, the ship lock system comprises ten parallel first turbine pumps, which are operated as pumps, and ten parallel second turbine pumps, which are operated as generators . However, the first turbine pumps and the second turbine pumps are operated according to a temporal pattern or program, where only those of the first turbine pumps and the second turbine pumps, which have a smaller head during the emptying method is operated. It can be seen from Fig. 6a that the overall emptying process involves four stages, viz. a first stage, where flow is constant, a ramp-up phase, a ramp-down phase, and a fourth stage, where the flow is constant. During the first stage and the ramp-up, only all of the first turbine pumps are used as pumps pumping water from ship lock 10 to the first body of water 12, whereas in the ramp-down stage and fourth stage, only all of the second turbine pumps are used as generators. In the first stage, the first turbine pumps are operated as pumps at a minimum speed, since the calculated BEP would lead to a speed below the minimum speed and hence a very slow emptying process. As the emptying process progresses the head *h₁* changes and also the BEP, whereby the speed of the turbine pumps are increased and hence the flow rate as seen in the ramp-up phase. In the ramp-down phase the first turbine pumps are shut off and, the second turbine pumps are used as generators. In the fourth stage, the second turbine pumps are operated at minimum speed, which is set from the controller.

In the energy saving mode under discussion, the water is moved on average by approximately 25% of the total head only. It can be seen that the net power consumption starts with a non-zero power consumption because of the pumps being run at a minimum speed. The net power consumption increases during the ramp-up stage up to 12,000 kW, where the first turbine pumps are stopped. At this time instant there is a big head *h₂* at the second turbine pumps 70. At the beginning of the ramp-down stage, the net power consumption shifts to a 9,000 kW power generation and slowly approaches zero. The total duration of the process is approximately three times longer than the fast emptying mode of Example I.

If the turbine pumps are operated with variable speed at BEP for the turbine pump, this can reduce the energy consumption down to approximately 7% of the geodetic energy, which in turn is only approximately 14% of that of a lock having three basins.

The advantage of the energy saving mode is a very low net energy consumption. However, the lock operation is rather slow. Further, there is a large jump from high power consumption to high power generation in the middle of the operation due to the switch. This can create some electrical noise on the mains.

### EXAMPLE III - POWER LIMITATION MODE EMPTYING

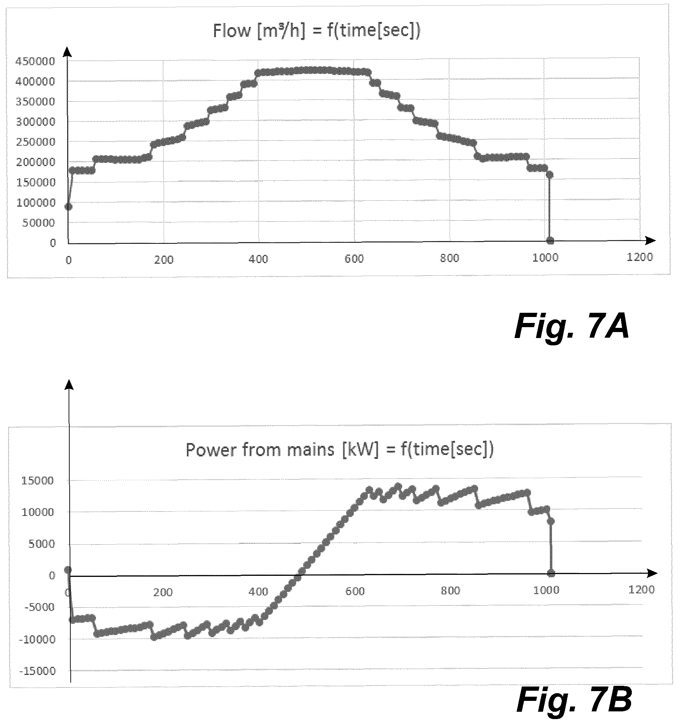

Fig. 7a and 7b show the flow rate and the corresponding net power consumption as a function of time for a third example of operating the ship lock system, where a ship lock emptying method is carried out via a third program. Similar to the two first examples, the ship lock system comprises ten parallel first turbine pumps operated as pumps and ten parallel second turbine pumps operated as generators. The Power Limitation Mode is a mixed mode, where a first number of generators are active simultaneously with a second number of pumps, and where the first and second numbers are incremented or decremented by a controller as a function of the head (*h₁*, *h₂*) acting on the pumps and generators.

In the third example, where the ship lock 10 must be emptied and water moved from ship lock 10 to first body of water 12 and from ship lock 10 to the second body of water 14, the number of first turbine pumps and the number of second turbine pumps that are used during the process is varied according to a double ladder function as seen in Fig. 7a. The process divides the power consumption into three stages, viz. a first one, where the ship lock generates substantially a constant power (at 10,000 kW), a second stage, where the net power consumption gradually increases, and a third stage, where the power consumption is substantially constant (at 13,000 kW). In the first stage, where power is generated, all pumps are active and the generators switched on stepwise. In the second stage, all pumps are active together with some of the generators. The progression from current generation for the mains to current consumption from the mains is done linearly and smoothly and the control method described here therefore generates less electrical disturbance on the mains compared to the method described in Figs.6a and 6b.

The operation of all turbine pumps may be controlled by the water levels and/or the actual head of the second turbine pumps (corresponding to height difference *h₂*), and the actual head of the first turbine pumps (corresponding to height difference *h₁*). In the following a control parameter RelHead is calculated as a ratio between the actual head of the second turbine pumps 70 and the maximum head, i.e. *h₂*/*(h₁*+*h₂*).

In this third example all first turbine pumps operate as pumps and all second turbine pumps operate as generators. From the start all first turbine pumps 40 and only two of the second turbine pumps 40 are switched on. When the level *h₂* decreases and RelHead reaches 93%, then the third of the second turbine pumps 70 is switched on. When RelHead reaches 89%, then the fourth of the second turbine pumps 70 is switched on. When RelHead reaches 83%, then the fifth of the second turbine pumps 70 is switched on. When RelHead reaches 78%, then the sixth of the second turbine pumps 70 is switched on. When RelHead reaches 74%, then the seventh of the second turbine pumps 70 is switched on. When RelHead reaches 70%, then number eight of the second turbine pumps 70 is switched on. When RelHead reaches 67%, then the ninth of the second turbine pumps is switched on. When RelHead reaches 33% then all the first turbine pumps and all the second turbine pumps are switched on, i.e. all pumps and generators are running at the same time. When RelHead reaches 30%, then the first of the first turbine pumps 40 is switched off. When RelHead reaches 26%, then the second of the first turbine pumps 40 is switched off. When RelHead reaches 22%, then the third of the first turbine pumps 40 is switched off. When RelHead reaches 17%, then the fourth of the first turbine pumps 40 is switched off. When RelHead reaches 11%, then the fifth of the first turbine pumps 40 is switched off. When RelHead reaches 5%, then the sixth of the first turbine pumps 40 is switched off. When RelHead reaches 0%, then the rest of the first turbine pumps 40 is switched off, i.e. both first and second turbine pumps are switched off. The ship lock 10 is now empty.

In the power limitation mode, the water is moved on average by approximately 52% of the maximum head. The energy consumption in the given example is approximately 28% compared to a ship lock having three basins and is 18% lower than energy consumption of Example I. The duration is approximately 34% longer than in Example I.

The power limitation mode or program has the advantage that a rather fast lock operation without large power peaks may be obtained. However, the saved energy consumption is not as large as for the energy saving mode.

Overall, it is seen that a ship lock filling mode (and equivalently a ship lock emptying mode) may be carried out according to different programs, where the first turbine pump(s) and second turbine pump(s) are operated according to different pre-set temporal patterns. The program may be chosen by an operator controlling the ship lock system, and the operator may choose a particular program based on particular considerations, such as time and economy. While the above description discloses three different programs, it is recognised that the ship lock may be operated according to different programs. Example I is characterised in that all first turbine pumps are always operated at the same time and that all second turbine pumps are also operated at the same time as the first turbine pumps. In Example II either members of the group of first turbine pumps are active, or members of the group of second turbine pumps are active, but members from the group of first turbine pumps are not active at the same time as members from the group of second turbine pumps. Example III provides just one example, where the first turbine pumps and the second turbine pumps are operated according to a more complex program, where at certain times only a limited number of the first turbine pumps and/or second turbine pumps are operated.

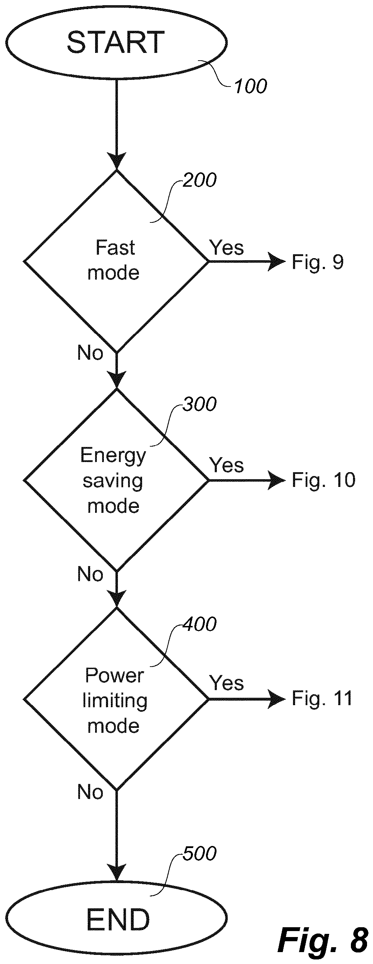

The three examples could for instance be operated according to the flow charts shown in Figs. 8-11. The ship lock system operation is as shown in Fig. 8 started in position number 100 and the operator may first choose a fast mode 200, in which the ship lock is emptied or filled at high rate, as shown for example I. If the operator does not choose fast mode 200, the operator is then presented with the option of choosing energy saving mode 300. If the operator does not choose energy saving mode 300, the operator is finally presented with option of choosing power limitation mode 400. If the operator does not choose this program, the operator is presented with another option or the operation is ended 500.

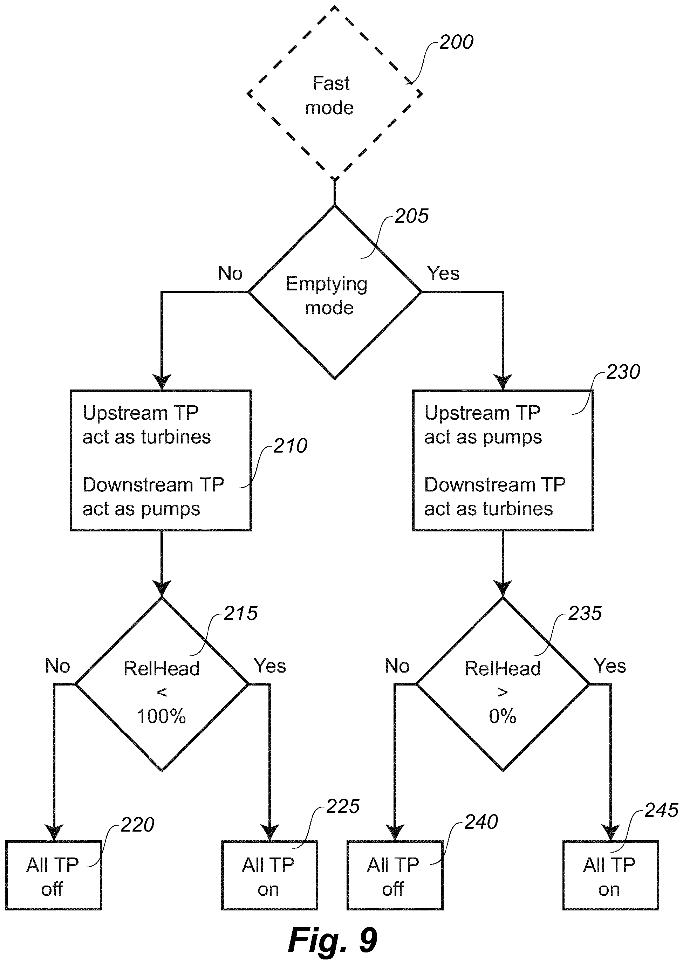

If the fast mode 200 is started, the system is as shown in Fig. 9 first prompted if the ship lock should be operated in emptying mode 205 (or filling mode), which can be determined based on the level of water in the ship lock. If the operator chooses filling mode, a pre-set program 210 is started, in which the first turbine pumps (or upstream turbine pumps) are operated in generator mode and the second turbine pumps (or downstream turbine pumps) are operated in pump mode. While the relative head (RelHead) is less than 100% (215), all turbine pumps are turned on 225 in order to fill the ship lock. Once the ship lock is filled, the relative head is 100%, and all the turbine pumps are turned off 220.

If emptying mode is started 205, another pre-set program 230 is started, in which the first turbine pumps (or upstream turbine pumps) are operated in pump mode and the second turbine pumps (or downstream turbine pumps) are operated in generator mode. While the relative head (RelHead) is above 0% (235), all turbine pumps are turned on 245 in order to empty the ship lock. Once the ship lock is emptied, the relative head is 0%, and all the turbine pumps are turned off 240.

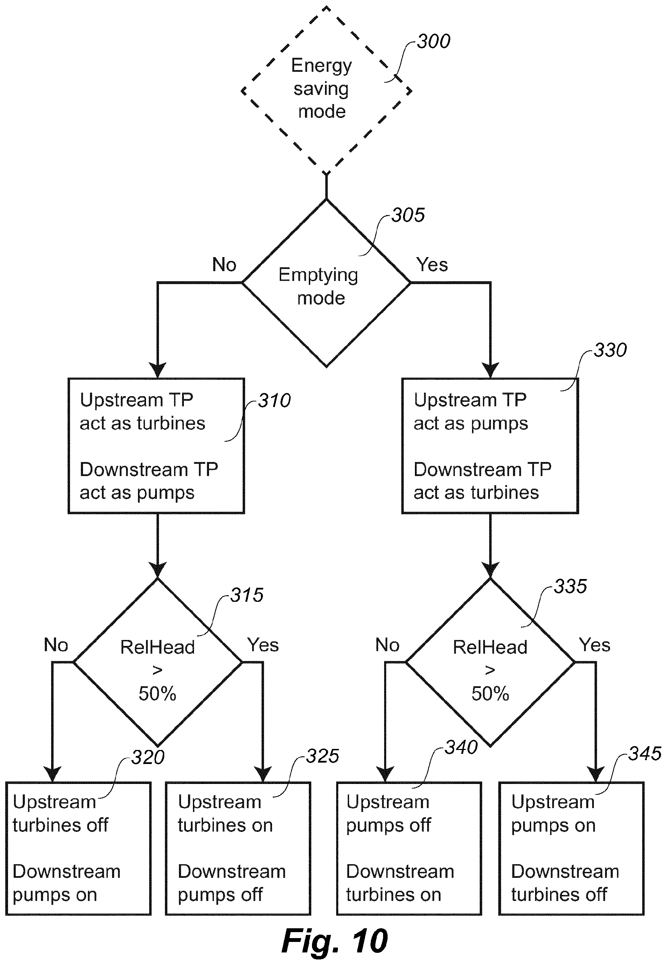

If Energy Saving Mode 300 is started, the system is as shown in Fig. 10 first prompted if the ship lock should be operated in emptying mode 305 (or filling mode), which can be determined based on the level of water in the ship lock. If the operator chooses filling mode, a pre-set program 310 is started, in which the first turbine pumps (or upstream turbine pumps) are operated in generator mode and the second turbine pumps (or downstream turbine pumps) are operated in pump mode. While the RelHead is less than 50% (315), all first turbine pumps are turned off while all second turbine pumps are turned on 320. As the water level in the ship lock raises the relative head increases. Once the relative head increases to above 50% (315), all first turbine pumps are turned on and all second turbine pumps are turned off 325 until the ship lock is filled.

If emptying mode is started, a different pre-set program 330 is started, in which the first turbine pumps (or upstream turbine pumps) are operated in pump mode and the second turbine pumps (or downstream turbine pumps) are operated in generator mode. While RelHead is larger than 50% (335), all first turbine pumps are turned on while all second turbine pumps are turned off 345. As the water level in the ship lock is lowered the relative head decreases. Once the relative head decreases to less than 50% (335), all first turbine pumps are turned off and all second turbine pumps are turned on 340 until the ship lock is emptied.

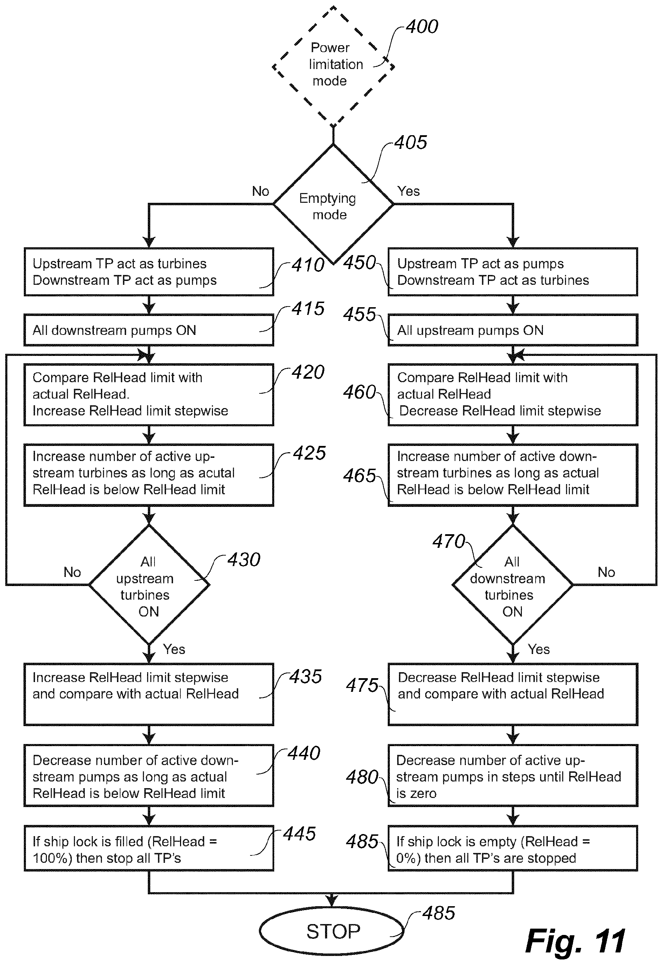

If the Power Limitation Mode 400 is started, the system is as shown in Fig. 11 first prompted if the ship lock should be operated in emptying mode 405 (or filling mode), which can be determined based on the level of water in the ship lock. If the operator chooses filling mode, a pre-set program 410 is started, in which the first turbine pumps (or upstream turbine pumps) are operated in generator mode and the second turbine pumps (or downstream turbine pumps) are operated in pump mode. In a first step 415, all the second turbine pumps are turned on. Further, a number of first turbines may also be turned on. In a number of iterative steps 420, 425 the relative head RelHead is compared with a relative head limit or threshold and the number of active first turbine pumps is increased stepwise according to the set limits or thresholds until all of the first turbine pumps are turned on 430. As the ship lock keeps filling and the relative head increases above other relative head limits or thresholds, the number of active second turbine pumps is decreased in a number of iterative steps 435, 440 until the ship lock is filled 445 after which all turbine pumps are shut off. The relative head limits or thresholds may for instance correspond to the levels mentioned in Example III.

If the operator chooses emptying mode, another pre-set program 450 is started, in which the first turbine pumps (or upstream turbine pumps) are operated in pump mode and the second turbine pumps (or downstream turbine pumps) are operated in generator mode. In a first step 455, all the first turbine pumps are turned on. Further, a number of second turbines may also be turned on. In a number of iterative steps 460, 465 the relative head is compared with a relative head limit or threshold and the number of active second turbine pumps is increased stepwise according to the set limits or thresholds until all of the second turbine pumps are turned on 470. As the ship lock keeps emptying and the relative head decreases below other relative head limits or thresholds, the number of active first turbine pumps is decreased in a number of iterative steps 475, 480 until the ship lock is emptied 485 after which all turbine pumps are shut off.

The invention has been described with reference to advantageous embodiments. However, the scope of the invention is not limited to the illustrated embodiments, and alterations and modifications can be carried out without deviating from the scope of the invention, which is defined by the following claims.

**Reference numerals**

| | |
|---|---|
| 1 | Ship lock system |
| 10 | Ship lock |
| 11 | First sensor |
| 12 | First body of water / upper body of water |
| 13 | Second sensor |
| 14 | Second body of water / lower body of water |
| 15 | Third sensor |
| 20 | First fluid communication passageway |
| 30 | Second fluid communication passageway |
| 40 | First turbine pump |
| 42 | First pump |
| 44 | First electrical machine / generator/motor |
| 46 | First speed controller / variable frequency converter |
| 48 | First valve |
| 50 | Mains |
| 70 | Second turbine pump |
| 72 | Second pump unit |
| 74 | Second electrical machine / generator/motor |
| 76 | Second speed controller / variable frequency converter |
| 78 | Second valve |
| 90 | Controller |

## Claims

1. A ship lock system (1) for use in a canal comprising:
- at least one ship lock (10) for connecting a first body of water (12), e.g. an upper body of water, and a second body of water (14), e.g. a lower body of water,
- at least a first fluid communication passageway (20) configured to coupling the ship lock (10) with the first body of water (12),
- at least a second fluid communication passageway (30) configured to coupling the ship lock (10) with the second body of water (14),
- at least one first turbine pump (40) arranged in fluid communication with the at least first fluid communication passageway (20),
- at least one second turbine pump (70) arranged in fluid communication with the at least second fluid communication passageway (30), and
- a control system (90) for controlling the at least one first turbine pump (40) and the at least one second turbine pump (70), **characterised in that**
- the at least one first turbine pump (40) is configured to function in a generator mode as an electrical generator and generating electrical power when water flows through the at least first fluid communication passageway (20) from the first body of water (12) to the ship lock (10), and is further configured to function in a pump mode as a pump for pumping water through the at least first fluid communication passageway (20) from the ship lock (10) to the first body of water (12), and
- the at least one second turbine pump (70) is configured to function in a generator mode as an electrical generator and generating electrical power when water flows through the at least second fluid communication passageway (30) from the ship lock (10) to the second body of water (14), and is further configured to function in a pump mode as a pump for pumping water through the at least second fluid communication passageway (30) from the second body of water (14) to the ship lock (10), and wherein
- the at least one first turbine pump (40) and the at least one second turbine pump (70) each are connected to a mains supply via a turbine pump drive (46,76) capable of providing a bi-directional electrical energy flow.

2. A system (1) according to claim 1, wherein the system (1) comprises a plurality of first turbine pumps (40) arranged in parallel in the at least first fluid communication passageway (20), and comprises a plurality of second turbine pumps (70) arranged in parallel in the at least second fluid communication passageway (30).

3. A system (1) according to claim 1 or 2, wherein the system (1) further comprises a number of sensors (11, 13, 15) that are configured to measure a first head (*h₁*) between the first body of water (12) and the ship lock (10), and a second head (*h₂*) between the ship lock (10) and the second body of water (14).

4. A system (1) according to any of claims 1-3, wherein
- the control system (90) is configured to operate the at least one first turbine pump (40) and the at least one second turbine pump (70) in the generator mode at or near a Best Efficiency Point (BEP) in order to obtain a maximum hydraulic efficiency, and/or
- the control system (90) is configured to operate the at least one first turbine pump (40) and the at least one second turbine pump (70) in the pump mode at or near a Best Efficiency Point (BEP) in order to obtain a maximum hydraulic efficiency.

5. A system (1) according to claims 3 and 4, wherein the Best Efficiency Point is calculated based on the first head (*h₁*) and/or the second head (*h₂*).

6. A system (1) according to any of claims 1-5, wherein the system (1) is configured to operate in a ship lock emptying mode and a ship lock filling mode, wherein
in the ship lock emptying mode, the control system (90) is configured to operate the at least one first turbine pump (40) in the pump mode and simultaneously operate the at least one second turbine pump (70) in the generator mode, and
in the ship lock filling mode, the control system (90) is configured to operate the at least one first turbine pump (40) in the generator mode and simultaneously operate the at least one second turbine pump (70) in the pump mode.

7. A system (1) according to any of claims 1-5, wherein the system (1) is configured to operate in a ship lock emptying mode and a ship lock filling mode, wherein
in the ship lock emptying mode, the control system (90) is configured to operate the at least one first turbine pump (40) in the pump mode and operate the at least one second turbine pump (70) in the generator mode, and
in the ship lock filling mode, the control system (90) is configured to operate the at least one first turbine pump (40) in the generator mode and operate the at least one second turbine pump (70) in the pump mode, and wherein
the control system (90) is configured to only operate that of the at least one first turbine pump (40) and the at least one second turbine pump (70), which has a smaller head (*h₁* or *h₂*) during said ship lock emptying mode or said ship lock filling mode.

8. A system (1) according to any of the preceding claims, wherein the control system (90) is configured to operate the system according to various predetermined programs for water emptying and water filling modes, wherein the at least one first turbine pump (40) and the at least one second turbine pump (70) each may be switched on and off and/or be switched between the generator mode and the pump mode according to the predetermined program, e.g. wherein the system (1) in a ship lock emptying mode is configured to switch between a maximum emptying rate mode and an energy saving mode and/or the system in a ship lock filling mode is configured to switch between a maximum filling rate mode and an energy saving mode.

9. A system (1) according to any of the preceding claims, wherein each of the at least one first turbine pumps (40) and the at least one second turbine pumps (70) are serially connected with a valve, which is controlled by said controller (90) to stop the flow, when the respective turbine pump (40; 70) is not in use.

10. A system (1) according to any of the preceding claims, wherein the at least one first turbine pump (40) and/or the second turbine pump (70) are horizontal split case pumps or vertical turbine pumps.

11. A system according to any of the preceding claims, wherein the ship lock (10) comprises a first gate between the first body of water (12) and the ship lock (10) for permitting passage of ships between the first body of water (12) and the ship lock (10), and a second gate between the second body of water (14) and the ship lock (10) for permitting passage of ships between the second body of water (14) and the ship lock (10).

12. A method of regulating the filling and emptying of water into a ship lock of a ship lock system, which is arranged to connect a first body of water (12), e.g. an upper body of water, and a second body of water (14), e.g. a lower body of water, and where at least a first fluid communication passageway (20) is configured to coupling the ship lock (10) with the first body of water with at least one first turbine pump (40) being arranged in the at least a first fluid communication passageway (20), and at least a second fluid communication passageway (30) configured to coupling the ship lock (10) with the second body of water (14) with at least one second turbine pump (70) being arranged in at least a second fluid communication passageway (30), and where the at least one first turbine pump (40) and the at least one second turbine pump (70) are controlled by a control system, wherein the system is configured to operate in a ship lock emptying mode and a ship lock filling mode, **characterised in that**
in the ship lock emptying mode, the controller system operates the at least one first turbine pump (40) and the at least one second turbine pump according to a pre-set program, in which the at least one first turbine pump is operated in a pump mode pumping water from the from the ship lock (10) to the first body of water (12) and where the at least one second turbine pump is operated in a generator mode generating electrical power as water flows from the ship lock (10) to the second body of water (14), and
in the ship lock filling mode, the controller system (90) operates the at least one first turbine pump (40) and the at least one second turbine pump according to a pre-set program, in which the at least one second turbine pump is operated in a pump mode pumping water from the from the second body of water (14) to the ship lock (10) and where the at least one first turbine pump is operated in a generator mode generating electrical power as water flows from the first body of water (12) to the ship lock (10).

13. A method according to claim 12, wherein at least in first time periods:
in the ship lock emptying mode, the at least one first turbine pump (40) is operated in the pump mode simultaneously with the at least one second turbine pump (70) being operated in the generator mode, and
in the ship lock filling mode, the at least one first turbine pump is operated in in the generator mode simultaneously with the at one least second turbine pump being operated in the pump mode.

14. A method according to claim 12 or 13, wherein at least in second time periods:
the control system controls the at least one first turbine pump (40) and the at least one second turbine pump (70) so as to operate only that of the at least one first turbine pump and the at least one second turbine pump, which has a smaller head (*h₁* or *h₂*) during said ship lock emptying mode or said ship lock filling mode.

15. A method according to any of claims 12-14, wherein the ship lock system (1) comprises a plurality of first turbine pumps (40) arranged in parallel in the at least one first fluid communication passageway (20), and comprises a plurality of second turbine pumps (70) arranged in parallel in the at least one second fluid communication passageway (30).

16. A method according to claim 15, wherein the plurality of first turbine pumps (40) and the plurality of second turbine pumps (70) are operated according to the pre-set program, e.g. wherein each of the plurality of first turbine pumps (40) and the plurality of second turbine pumps (70) are operated to be switched on and off and/or be switched between the generator mode and the pump mode accordance to the pre-set program.

17. A method according to claim 15, wherein a transgression period from generating electrical power into the mains (50) to consuming power from the mains is prolonged in time by letting said controller (90) sequentially activating or deactivating individual turbine pumps inside the groups of first and/or second turbine pumps.

18. Method according to claim 15 wherein a fixed number of turbine pumps within either the group of first turbine pumps or second turbine pumps are kept activated for a period of time, and that, inside said period of time, the number of turbine pumps within the group of first or second turbine pumps not having a fixed number kept activated are incremented or decremented by the controller (90).

## Patentansprüche

1. Schiffsschleusensystem (1) zur Verwendung in einem Kanal, umfassend:
- mindestens eine Schiffsschleuse (10) zum Verbinden eines ersten Wasserkörpers (12), z. B. eines oberen Wasserkörpers und eines zweiten Wasserkörpers (14), z. B. eines unteren Wasserkörpers,
- mindestens einen ersten Fluidverbindungsdurchgang (20), der zum Koppeln der Schiffsschleuse (10) mit dem ersten Wasserkörper (12) konfiguriert ist,
- mindestens einen zweiten Fluidverbindungsdurchgang (30), der zum Koppeln der Schiffsschleuse (10) mit dem zweiten Wasserkörper (14) konfiguriert ist,
- mindestens eine erste Turbinenpumpe (40), die in Fluidverbindung mit dem mindestens ersten Fluidverbindungsdurchgang (20) angeordnet ist,
- mindestens eine zweite Turbinenpumpe (70), die in Fluidverbindung mit dem mindestens zweiten Fluidverbindungsdurchgang (30) angeordnet ist, und
- ein Steuersystem (90) zum Steuern der mindestens einen ersten Turbinenpumpe (40) und der mindestens einen zweiten Turbinenpumpe (70), **dadurch gekennzeichnet, dass**
- die mindestens eine erste Turbinenpumpe (40) konfiguriert ist, um in einem Generatormodus als ein elektrischer Generator zu fungieren und elektrische Energie zu erzeugen, wenn Wasser von dem ersten Wasserkörper (12) durch den mindestens ersten Fluidverbindungsdurchgang (20) zu der Schiffsschleuse (10) fließt und weiter konfiguriert ist, um in einem Pumpenmodus als Pumpe zum Pumpen von Wasser von der Schiffsschleuse (10) durch den mindestens ersten Fluidverbindungsdurchgang (20) zu dem ersten Wasserkörper (12) zu fungieren, und
- die mindestens eine zweite Turbinenpumpe (70) konfiguriert ist, um in einem Generatormodus als elektrischer Generator zu fungieren und elektrische Energie zu erzeugen, wenn Wasser von der Schiffsschleuse (10) durch den mindestens zweiten Fluidverbindungsdurchgang (30) zu dem zweiten Wasserkörper (14) fließt und weiter konfiguriert ist, um in einem Pumpenmodus als Pumpe zum Pumpen von Wasser vom zweiten Wasserkörper (14) durch den mindestens zweiten Fluidverbindungsdurchgang (30) zur Schiffsschleuse (10) zu fungieren und wobei
- die mindestens eine erste Turbinenpumpe (40) und die mindestens eine zweite Turbinenpumpe (70) jeweils über einen Turbinenpumpenantrieb (46, 76), der einen bidirektionalen elektrischen Energiefluss bereitstellen kann, mit einem Versorgungsnetz verbunden sind.

2. System (1) nach Anspruch 1, wobei das System (1) eine Vielzahl von ersten Turbinenpumpen (40) umfasst, die in dem mindestens ersten Fluidverbindungsdurchgang (20) parallel angeordnet sind, und eine Vielzahl von zweiten Turbinenpumpen (70) umfasst, die in dem mindestens zweiten Fluidverbindungsdurchgang (30) parallel angeordnet sind.

3. System (1) nach Anspruch 1 oder 2, wobei das System (1) weiter eine Anzahl von Sensoren (11, 13, 15) umfasst, die konfiguriert sind, um eine erste Höhe (h₁) zwischen dem ersten Wasserkörper (12) und der Schiffsschleuse (10) und eine zweite Höhe (h₂) zwischen der Schiffsschleuse (10) und dem zweiten Wasserkörper (14) zu messen.

4. System (1) nach einem der Ansprüche 1 bis 3, wobei
- das Steuersystem (90) konfiguriert ist, um die mindestens eine erste Turbinenpumpe (40) und die mindestens eine zweite Turbinenpumpe (70) im Generatormodus mit einem Wirkungsgrad im oder nahe des Bestpunktes (BEP, Best Efficiency Point) zu betreiben, um einen maximalen hydraulischen Wirkungsgrad zu erhalten und/oder
- das Steuersystem (90) konfiguriert ist, um die mindestens eine erste Turbinenpumpe (40) und die mindestens eine zweite Turbinenpumpe (70) im Pumpenmodus mit einem Wirkungsgrad im oder nahe des Bestpunktes (BEP) zu betreiben, um einen maximalen hydraulischen Wirkungsgrad zu erhalten.

5. System (1) nach den Ansprüchen 3 und 4, wobei der Wirkungsgrad im Bestpunkt basierend auf der ersten Höhe (h₁) und/oder der zweiten Höhe (h₂) berechnet wird.

6. System (1) nach einem der Ansprüche 1 bis 5, wobei das System (1) zum Betrieb in einem Schiffsschleusenentleerungsmodus und einem Schiffsschleusenbefüllungsmodus konfiguriert ist, wobei
in dem Schiffsschleusenentleerungsmodus das Steuersystem (90) konfiguriert ist, um die mindestens eine erste Turbinenpumpe (40) im Pumpenmodus zu betreiben und gleichzeitig die mindestens eine zweite Turbinenpumpe (70) im Generatormodus zu betreiben, und
in dem Schiffsschleusenbefüllungsmodus das Steuersystem (90) konfiguriert ist, um die mindestens eine erste Turbinenpumpe (40) im Generatormodus zu betreiben und gleichzeitig die mindestens eine zweite Turbinenpumpe (70) im Pumpenmodus zu betreiben.

7. System (1) nach einem der Ansprüche 1 bis 5, wobei das System (1) zum Betrieb in einem Schiffsschleusenentleerungsmodus und einem Schiffsschleusenbefüllungsmodus konfiguriert ist, wobei
im Schiffsschleusenentleerungsmodus das Steuersystem (90) konfiguriert ist, um die mindestens eine erste Turbinenpumpe (40) im Pumpenmodus zu betreiben und die mindestens eine zweite Turbinenpumpe (70) im Generatormodus zu betreiben, und
im Schiffsschleusenbefüllungsmodus das Steuersystem (90) konfiguriert ist, um die mindestens eine erste Turbinenpumpe (40) im Generatormodus zu betreiben und die mindestens eine zweite Turbinenpumpe (70) im Pumpenmodus zu betreiben, und wobei
das Steuersystem (90) konfiguriert ist, um nur diejenige der mindestens einen ersten Turbinenpumpe (40) und der mindestens einen zweiten Turbinenpumpe (70) zu betreiben, die während des Schiffsschleusenentleerungsmodus oder des Schiffsschleusenbefüllungsmodus eine kleinere Höhe (h₁ oder h₂) aufweist.

8. System (1) nach einem der vorstehenden Ansprüche, wobei das Steuersystem (90) konfiguriert ist, um das System nach verschiedenen vorbestimmten Programmen für Wasserentleerungs- und Wasserbefüllungsmodi zu betreiben, wobei die mindestens eine erste Turbinenpumpe (40) und die mindestens eine zweite Turbinenpumpe (70) jeweils ein- und ausgeschaltet werden können und/oder zwischen dem Generatormodus und dem Pumpenmodus nach dem vorbestimmten Programm umgeschaltet werden können, wobei z. B. das System (1) in einem Schiffsschleusenentleerungsmodus konfiguriert ist, um zwischen einem Modus für eine maximale Entleerungsrate und einem Energieeinsparungsmodus umzuschalten, und/oder das System in einem Schiffsschleusenbefüllungsmodus konfiguriert ist, um zwischen einem Modus für eine maximale Befüllungsrate und einem Energieeinsparungsmodus umzuschalten.

9. System (1) nach einem der vorstehenden Ansprüche, wobei jede der mindestens einen ersten Turbinenpumpe (40) und der mindestens einen zweiten Turbinenpumpe (70) mit einem Ventil in Reihe geschaltet ist, das von der Steuerung (90) zum Stoppen des Flusses gesteuert wird, wenn die jeweilige Turbinenpumpe (40; 70) nicht in Gebrauch ist.

10. System (1) nach einem der vorstehenden Ansprüche, wobei die mindestens eine erste Turbinenpumpe (40) und/oder zweite Turbinenpumpe (70) horizontale Pumpen mit gespaltenem Gehäuse oder vertikale Turbinenpumpen sind.

11. System nach einem der vorstehenden Ansprüche, wobei die Schiffsschleuse (10) ein erstes Tor zwischen dem ersten Wasserkörper (12) und der Schiffsschleuse (10) umfasst, um den Durchgang von Schiffen zwischen dem ersten Wasserkörper (12) und der Schiffsschleuse (10) zu ermöglichen, und ein zweites Tor zwischen dem zweiten Wasserkörper (14) und der Schiffsschleuse (10) umfasst, um den Durchgang von Schiffen zwischen dem zweiten Wasserkörper (14) und der Schiffsschleuse (10) zu ermöglichen.

12. Verfahren zum Regeln des Befüllens und Entleerens von Wasser in einer Schiffsschleuse eines Schiffsperrsystems, das zum Verbinden eines ersten Wasserkörpers (12), z. B. eines oberen Wasserkörpers und eines zweiten Wasserkörpers (14), z. B. eines unteren Wasserkörpers, angeordnet ist, und wobei mindestens ein erster Fluidverbindungsdurchgang (20) konfiguriert ist, um die Schiffsschleuse (10) mit dem ersten Wasserkörper zu koppeln, wobei mindestens eine erste Turbinenpumpe (40) in dem mindestens einen ersten Fluidverbindungsdurchgang (20) angeordnet ist und mindestens ein zweiter Fluidverbindungsdurchgang (30) konfiguriert ist, um die Schiffsschleuse (10) mit dem zweiten Wasserkörper (14) zu koppeln, wobei mindestens eine zweite Turbinenpumpe (70) in mindestens einem zweiten Fluidverbindungsdurchgang (30) angeordnet ist, und wobei die mindestens eine erste Turbinenpumpe (40) und die mindestens eine zweite Turbinenpumpe (70) von einem Steuersystem gesteuert werden, wobei das System zum Betrieb in einem Schiffsschleusenentleerungsmodus und einem Schiffsschleusenbefüllungsmodus konfiguriert ist, **dadurch gekennzeichnet, dass**
in dem Schiffsschleusenentleerungsmodus das Steuersystem die mindestens eine erste Turbinenpumpe (40) und die mindestens eine zweite Turbinenpumpe nach einem vorgegebenen Programm betreibt, in dem die mindestens eine erste Turbinenpumpe in einem Pumpenmodus betrieben wird, wobei Wasser von der Schiffsschleuse (10) zu dem ersten Wasserkörper (12) gepumpt wird, wobei die mindestens eine zweite Turbinenpumpe in einem Generatormodus betrieben wird, wobei elektrische Energie erzeugt wird, wenn Wasser von der Schiffsschleuse (10) zu dem zweiten Wasserkörper (14) fließt und
in dem Schiffsschleusenbefüllungsmodus das Steuersystem (90) die mindestens eine erste Turbinenpumpe (40) und die mindestens eine zweite Turbinenpumpe nach einem vorgegebenen Programm betreibt, in dem die mindestens eine zweite Turbinenpumpe in einem Pumpenmodus betrieben wird, wobei Wasser von dem zweiten Wasserkörper (14) zu der Schiffsschleuse (10) gepumpt wird und bei dem die mindestens eine erste Turbinenpumpe in einem Generatormodus betrieben wird, wobei elektrische Energie erzeugt wird, wenn Wasser von dem ersten Wasserkörper (12) zur Schiffsschleuse (10) fließt.

13. Verfahren nach Anspruch 12, wobei mindestens in ersten Zeiträumen:
im Schiffsschleusenentleerungsmodus die mindestens eine erste Turbinenpumpe (40) im Pumpenmodus gleichzeitig mit der im Generatormodus betriebenen mindestens einen zweiten Turbinenpumpe (70) betrieben wird und
im Schiffsschleusenbefüllungsmodus die mindestens eine erste Turbinenpumpe im Generatormodus gleichzeitig mit der im Pumpenmodus betriebenen mindestens einen zweiten Turbinenpumpe betrieben wird.

14. Verfahren nach Anspruch 12 oder 13, wobei mindestens in zweiten Zeiträumen:
das Steuersystem die mindestens eine erste Turbinenpumpe (40) und die mindestens eine zweite Turbinenpumpe (70) steuert, um nur diejenige der mindestens einen ersten Turbinenpumpe und der mindestens einen zweiten Turbinenpumpe zu betreiben, die während des Schiffsschleusenentleerungsmodus oder des Schiffsschleusenbefüllungsmodus eine kleinere Höhe (h₁ oder h₂) aufweist.

15. Verfahren nach einem der Ansprüche 12 bis 14, wobei das Schiffsschleusensystem (1) eine Vielzahl von ersten Turbinenpumpen (40) umfasst, die in dem mindestens einen ersten Fluidverbindungsdurchgang (20) parallel angeordnet sind, und eine Vielzahl von zweiten Turbinenpumpen (70) umfasst, die in dem mindestens einen zweiten Fluidverbindungsdurchgang (30) parallel angeordnet sind.

16. Verfahren nach Anspruch 15, bei dem die Vielzahl von ersten Turbinenpumpen (40) und die Vielzahl von zweiten Turbinenpumpen (70) nach dem vorbestimmten Programm betrieben werden, wobei z. B. jede der Vielzahl von ersten Turbinenpumpen (40) und der Vielzahl von zweiten Turbinenpumpen (70) so betrieben werden, dass sie ein- und ausgeschalten werden und/oder dass sie zwischen dem Generatormodus und dem Pumpenmodus nach dem vorbestimmten Programm umgeschaltet werden.

17. Verfahren nach Anspruch 15, wobei eine Überschreitungsperiode von der Erzeugung elektrischer Energie in das Netz (50) hinein bis zum Verbrauch von Energie aus dem Netz zeitlich verlängert wird, indem die Steuerung (90) einzelne Turbinenpumpen innerhalb der Gruppen von ersten und/oder zweiten Turbinenpumpen nacheinander aktivieren oder deaktivieren lässt.

18. Verfahren nach Anspruch 15, wobei eine feste Anzahl von Turbinenpumpen entweder innerhalb der Gruppe von ersten Turbinenpumpen oder innerhalb der Gruppe von zweiten Turbinenpumpen für einen Zeitraum aktiviert gehalten wird und innerhalb dieses Zeitraums die Anzahl der Turbinenpumpen innerhalb der Gruppe von ersten oder zweiten Turbinenpumpen, von denen keine feste Anzahl aktiviert gehaltenen wird, von der Steuerung (90) inkrementiert oder dekrementiert wird.

## Revendications

1. Système d'écluse pour bateaux (1) pour une utilisation dans un canal comprenant :
- au moins une écluse pour bateaux (10) pour relier une première masse d'eau (12), par exemple une masse d'eau supérieure, et une seconde masse d'eau (14), par exemple une masse d'eau inférieure,
- au moins un premier passage de communication fluidique (20) conçu pour coupler l'écluse pour bateaux (10) à la première masse d'eau (12),
- au moins un second passage de communication fluidique (30) conçu pour coupler l'écluse pour bateaux (10) à la seconde masse d'eau (14),
- au moins une première pompe à turbine (40) disposée en communication fluidique avec le au moins premier passage de communication fluidique (20),
- au moins une seconde pompe à turbine (70) disposée en communication fluidique avec le au moins second passage de communication fluidique (30), et
- un système de commande (90) pour commander la au moins une première pompe à turbine (40) et la au moins une seconde pompe à turbine (70), **caractérisé en ce que**
- la au moins une première pompe à turbine (40) est conçue pour fonctionner en un mode générateur en tant que générateur électrique et générant du courant électrique lorsque de l'eau s'écoule à travers le au moins premier passage de communication fluidique (20) depuis la première masse d'eau (12) jusqu'à l'écluse pour bateaux (10), et est en outre conçue pour fonctionner en un mode pompe en tant que pompe pour pomper de l'eau à travers le au moins premier passage de communication fluidique (20) depuis l'écluse pour bateaux (10) jusqu'à la première masse d'eau (12), et
- la au moins une seconde pompe à turbine (70) est conçue pour fonctionner en un mode générateur en tant que générateur électrique et générant du courant électrique lorsque de l'eau s'écoule à travers le au moins second passage de communication fluidique (30) depuis l'écluse pour bateaux (10) jusqu'à la seconde masse d'eau (14), et est en outre conçue pour fonctionner en un mode pompe en tant que pompe pour pomper de l'eau à travers le au moins second passage de communication fluidique (30) depuis la seconde masse d'eau (14) jusqu'à l'écluse pour bateaux (10), et dans lequel
- la au moins une première pompe à turbine (40) et la au moins une seconde pompe à turbine (70) sont chacune reliées à une alimentation secteur par l'intermédiaire d'un entraînement de pompe à turbine (46, 76) capable de fournir un flux d'énergie électrique bidirectionnel.

2. Système (1) selon la revendication 1, dans lequel le système (1) comprend une pluralité de premières pompes à turbine (40) disposées en parallèle dans le au moins premier passage de communication fluidique (20), et comprend une pluralité de secondes pompes à turbine (70) disposées en parallèle dans le au moins second passage de communication fluidique (30).

3. Système (1) selon la revendication 1 ou 2, dans lequel le système (1) comprend en outre un nombre de capteurs (11, 13, 15) qui sont conçus pour mesurer une première hauteur de chute (*h₁*) entre la première masse d'eau (12) et l'écluse pour bateaux (10), et une seconde hauteur de chute (*h₂*) entre l'écluse pour bateaux (10) et la seconde masse d'eau (14).

4. Système (1) selon l'une quelconque des revendications 1 à 3, dans lequel
- le système de commande (90) est conçu pour actionner la au moins une première pompe à turbine (40) et la au moins une seconde pompe à turbine (70) en mode générateur au niveau ou près d'un point de rendement maximal (BEP) afin d'obtenir un rendement hydraulique maximum, et/ou
- le système de commande (90) est conçu pour actionner la au moins une première pompe à turbine (40) et la au moins une seconde pompe à turbine (70) en mode pompe au niveau ou près d'un point de rendement maximal (BEP) afin d'obtenir un rendement hydraulique maximum.

5. Système (1) selon les revendications 3 et 4, dans lequel le point de rendement maximal est calculé sur la base de la première hauteur de chute (*h₁*) et/ou de la seconde hauteur de chute (*h₂*).

6. Système (1) selon l'une quelconque des revendications 1 à 5, dans lequel le système (1) est conçu pour fonctionner en un mode vidange d'écluse pour bateaux et en un mode remplissage d'écluse pour bateaux, dans lequel
en mode vidange d'écluse pour bateaux, le système de commande (90) est conçu pour actionner la au moins une première pompe à turbine (40) en mode pompe et actionner simultanément la au moins une seconde pompe à turbine (70) en mode générateur, et
en mode remplissage d'écluse pour bateaux, le système de commande (90) est conçu pour actionner la au moins une première pompe à turbine (40) en mode générateur et actionner simultanément la au moins une seconde pompe à turbine (70) en mode pompe.

7. Système (1) selon l'une quelconque des revendications 1 à 5, dans lequel le système (1) est conçu pour fonctionner en un mode vidange d'écluse pour bateaux et en un mode remplissage d'écluse pour bateaux, dans lequel
en mode vidange d'écluse pour bateaux, le système de commande (90) est conçu pour actionner la au moins une première pompe à turbine (40) en mode pompe et actionner la au moins une seconde pompe à turbine (70) en mode générateur, et
en mode remplissage d'écluse pour bateaux, le système de commande (90) est conçu pour actionner la au moins une première pompe à turbine (40) en mode générateur et actionner la au moins une seconde pompe à turbine (70) en mode pompe, et dans lequel
le système de commande (90) est conçu pour actionner uniquement celle de la au moins une première pompe à turbine (40) et de la au moins une seconde pompe à turbine (70) qui a une hauteur de chute (*h₁* ou *h₂*) inférieure durant ledit mode vidange d'écluse pour bateaux ou ledit mode remplissage d'écluse pour bateaux.

8. Système (1) selon l'une quelconque des revendications précédentes, dans lequel le système de commande (90) est conçu pour actionner le système selon divers programmes prédéterminés pour les modes vidange d'eau et remplissage d'eau, dans lequel la au moins une première pompe à turbine (40) et la au moins une seconde pompe à turbine (70) peuvent être chacune allumées et éteintes et/ou être commutées entre le mode générateur et le mode pompe selon le programme prédéterminé, par exemple dans lequel le système (1) en mode vidange d'écluse pour bateaux est conçu pour commuter entre un mode rythme de vidange maximal et un mode économie d'énergie et/ou le système en mode remplissage d'écluse pour bateaux est conçu pour commuter entre un mode rythme de remplissage maximal et un mode économie d'énergie.

9. Système (1) selon l'une quelconque des revendications précédentes, dans lequel chacune des au moins une premières pompes à turbine (40) et des au moins une secondes pompes à turbine (70) est reliée en série à une vanne, qui est commandée par ledit dispositif de commande (90) pour arrêter l'écoulement, lorsque la pompe à turbine (40 ; 70) respective n'est pas en service.

10. Système (1) selon l'une quelconque des revendications précédentes, dans lequel la au moins une première pompe à turbine (40) et/ou la seconde pompe à turbine (70) sont des pompes à plan de joint horizontal ou des pompes à turbine verticale.

11. Système selon l'une quelconque des revendications précédentes, dans lequel l'écluse pour bateaux (10) comprend une première porte entre la première masse d'eau (12) et l'écluse pour bateaux (10) afin de permettre le passage de bateaux entre la première masse d'eau (12) et l'écluse pour bateaux (10), et une seconde porte entre la seconde masse d'eau (14) et l'écluse pour bateaux (10) afin de permettre le passage de bateaux entre la seconde masse d'eau (14) et l'écluse pour bateaux (10).

12. Procédé de régulation du remplissage et de la vidange d'eau dans une écluse pour bateaux d'un système d'écluse pour bateaux, qui est disposé de façon à relier une première masse d'eau (12), par exemple une masse d'eau supérieure, et une seconde masse d'eau (14), par exemple une masse d'eau inférieure, et où au moins un premier passage de communication fluidique (20) est conçu pour coupler l'écluse pour bateaux (10) à la première masse d'eau avec au moins une première pompe à turbine (40) disposée dans le au moins un premier passage de communication fluidique (20), et au moins un second passage de communication fluidique (30) est conçu pour coupler l'écluse pour bateaux (10) à la seconde masse d'eau (14) avec au moins une seconde pompe à turbine (70) disposée dans au moins un second passage de communication fluidique (30), et où la au moins une première pompe à turbine (40) et la au moins une seconde pompe à turbine (70) sont commandées par un système de commande, dans lequel le système est conçu pour fonctionner en un mode vidange d'écluse pour bateaux et en un mode remplissage d'écluse pour bateaux, **caractérisé en ce que**
en mode vidange d'écluse pour bateaux, le système de commande actionne la au moins une première pompe à turbine (40) et la au moins une seconde pompe à turbine selon un programme préfini, dans lequel la au moins une première pompe à turbine est actionnée en mode pompe pompant l'eau depuis l'écluse pour bateaux (10) jusqu'à la première masse d'eau (12) et où la au moins une seconde pompe à turbine est actionnée en mode générateur générant du courant électrique lorsque l'eau s'écoule depuis l'écluse pour bateaux (10) jusqu'à la seconde masse d'eau (14), et
en mode remplissage d'écluse pour bateaux, le système de commande (90) actionne la au moins une première pompe à turbine (40) et la au moins une seconde pompe à turbine selon un programme préfini, dans lequel la au moins une seconde pompe à turbine est activée en mode pompe pompant l'eau depuis la seconde masse d'eau (14) jusqu'à l'écluse pour bateaux (10) et où la au moins une première pompe à turbine est activée en mode générateur générant du courant électrique lorsque l'eau s'écoule depuis la première masse d'eau (12) jusqu'à l'écluse pour bateaux (10).

13. Procédé selon la revendication 12, dans lequel au moins dans des premières périodes de temps :
en mode vidange d'écluse pour bateaux, la au moins une première pompe à turbine (40) est actionnée en mode pompe simultanément avec la au moins une seconde pompe à turbine (70) qui est actionnée en mode générateur, et
en mode remplissage d'écluse pour bateaux, la au moins une première pompe à turbine est actionnée en mode générateur simultanément avec la au moins une seconde pompe à turbine qui est actionnée en mode pompe.

14. Procédé selon la revendication 12 ou 13, dans lequel au moins dans des secondes périodes de temps :
le système de commande commande la au moins une première pompe à turbine (40) et la au moins une seconde pompe à turbine (70) de façon à actionner uniquement celle de la au moins une première pompe à turbine et de la au moins une seconde pompe à turbine qui a une hauteur de chute (*h₁* ou *h₂*) inférieure durant ledit mode vidange d'écluse pour bateaux ou ledit mode remplissage d'écluse pour bateaux.

15. Procédé selon l'une quelconque des revendications 12 à 14, dans lequel le système d'écluse pour bateaux (1) comprend une pluralité de premières pompes à turbine (40) disposées en parallèle dans le au moins un premier passage de communication fluidique (20), et comprend une pluralité de secondes pompes à turbine (70) disposées en parallèle dans le au moins un second passage de communication fluidique (30).

16. Procédé selon la revendication 15, dans lequel la pluralité de premières pompes à turbine (40) et la pluralité de secondes pompes à turbine (70) sont actionnées selon le programme prédéfini, par exemple dans lequel chacune de la pluralité de premières pompes à turbine (40) et de la pluralité de secondes pompes à turbine (70) est actionnée pour être allumée et éteinte et/ou être commutée entre le mode générateur et le mode pompe conformément au programme prédéfini.

17. Procédé selon la revendication 15, dans lequel une période de transgression de la génération de courant électrique dans le secteur (50) à la consommation de courant électrique du secteur est prolongée dans le temps en laissant ledit dispositif de commande (90) activer ou désactiver de façon séquentielle les pompes à turbine individuelles au sein des groupes de premières et/ou secondes pompes à turbine.

18. Procédé selon la revendication 15, dans lequel un nombre fixé de pompes à turbine au sein soit du groupe de premières pompes à turbine soit du groupe de secondes pompes à turbine sont maintenues activées pendant une période de temps, et tel que, au sein de ladite période de temps, le nombre de pompes à turbine au sein du groupe de premières ou secondes pompes à turbine n'ayant pas un nombre maintenu activé est incrémenté ou décrémenté par le dispositif de commande (90).
